# EUROPEAN PATENT APPLICATION

(11) **EP 4 841 124 A1**
(43) Date of publication of application: **18.11.2026**
(21) Application number: 26178351.8
(22) Date of filing: 12.05.2026
(51) Int. Cl.: F16C 19/26, F16C 19/52, F16C 33/58, F16C 33/80

(54) **RADIAL RETENTION FEATURE FOR AIRCRAFT BEARING CAGE**

(30) Priority: 14.05.2025 US 202519207990
(71) Applicant: Pratt & Whitney Canada Corp., Longueuil, Québec J4G 1A1 (CA)
(72) Inventor: GAGNE, Sebastien, Longueuil (CA); PRUNERA USACH, Stephane, Longueuil (CA)
(74) Representative: Dehns

(57) **Abstract**

A bearing assembly (40) of a gas turbine engine or gearbox (24) includes a first ring (42) and a second ring (44). The second ring (44) is radially aligned with the first ring (42) such that a cavity is formed therebetween. A plurality of rolling elements (50) are arranged within the cavity and a cage (52) is operably coupled to the plurality of rolling elements (50). A radial member (70) extends from proximate the second ring (44) toward the first ring (42) and a distal end of the radial member (70) is separated from an interior surface (56) of the first ring (42) by an engagement clearance (74).

## Description

### BACKGROUND

Exemplary embodiments pertain to a turbine engine of an aircraft, and more particularly, to a bearing assembly associated with a rotating shaft used to transmit power, such as engine main shaft or output shaft of an aeronautical gearbox. Technologies improving reliability of such engines are always desirable.

### SUMMARY

According to an embodiment, a bearing assembly of a gas turbine engine or gearbox includes a first ring and a second ring. The second ring is radially aligned with the first ring such that a cavity is formed therebetween. A plurality of rolling elements are arranged within the cavity and a cage is operably coupled to the plurality of rolling elements. A radial member extends from proximate the second ring toward the first ring and a distal end of the radial member is separated from an interior surface of the first ring by an engagement clearance.

In addition to one or more of the features described above, or as an alternative, in further embodiments the radial member is integrally formed with the second ring.

In addition to one or more of the features described above, or as an alternative, in further embodiments the radial member is separate from the second ring.

In addition to one or more of the features described above, or as an alternative, in further embodiments one of the first ring and the second ring is a shaft.

In addition to one or more of the features described above, or as an alternative, in further embodiments the first ring is axially elongated relative to the second ring. The first ring has an engagement portion that extends axially beyond the second ring and the radial member is radially aligned with the engagement portion.

In addition to one or more of the features described above, or as an alternative, in further embodiments at least one of the radial member and the interior surface of the first ring at the engagement portion includes an anti-friction material.

In addition to one or more of the features described above, or as an alternative, in further embodiments at least one of the radial member and the interior surface of the first ring at the engagement portion is formed from a heat-treated material.

In addition to one or more of the features described above, or as an alternative, in further embodiments the radial member forms a part of a lubricant drainage path from the plurality of rolling elements.

In addition to one or more of the features described above, or as an alternative, in further embodiments the radial member includes a plurality of through holes that form the part of the lubricant drainage path.

In addition to one or more of the features described above, or as an alternative, in further embodiments the engagement clearance is radially offset from an exterior surface of the plurality of rolling elements engageable with the second ring and the first ring.

In addition to one or more of the features described above, or as an alternative, in further embodiments the engagement clearance is located a first radial distance from the axis of rotation of the bearing assembly. The exterior surface of the plurality of rolling elements engageable with the first ring is located a second radial distance from the axis of rotation of the bearing assembly. The first radial distance is greater than the second radial distance.

In addition to one or more of the features described above, or as an alternative, in further embodiments the first ring has a stepped configuration.

In addition to one or more of the features described above, or as an alternative, in further embodiments the radial member is a journal bearing.

In addition to one or more of the features described above, or as an alternative, in further embodiments an oil channel extends through a portion of the radial member.

According to an embodiment, a gas turbine engine comprising or aeronautical gearbox includes a shaft rotatable about an axis and a bearing assembly associated with the shaft. The bearing assembly includes a first ring, a second ring, and a cavity formed between the first ring and the second ring. A plurality of rolling elements are coupled to a roller bearing cage. The plurality of rolling elements are arranged within the cavity. A radial member extends toward the first ring and a distal end of the radial member is separated from an interior surface of the first ring by an engagement clearance.

In addition to one or more of the features described above, or as an alternative, in further embodiments the first ring is associated with a stationary component.

In addition to one or more of the features described above, or as an alternative, in further embodiments the first ring is associated with a rotatable component.

In addition to one or more of the features described above, or as an alternative, in further embodiments the radial member is axially offset from the roller bearing cage.

In addition to one or more of the features described above, or as an alternative, in further embodiments the first ring is an outer ring and the second ring is an inner ring.

According to an embodiment, a method of operating a gas turbine engine includes providing a bearing assembly including a first ring rotatably fixed to a shaft, a second ring, a plurality of rolling elements arranged within a cavity formed between the first ring and the second ring, and a radial member extending from the first ring toward the second ring. The radial member is offset from the second ring by an engagement clearance. The method includes rotating the shaft about an axis of rotation and engaging the second ring with the radial member in response to a failing of an element of the bearing assembly to restrict separation of the plurality of rolling elements from the cavity.

### BRIEF DESCRIPTION OF THE DRAWINGS

The following descriptions should not be considered limiting in any way. With reference to the accompanying drawings, like elements are numbered alike:
FIG. 1 is a schematic diagram of a turbine engine according to an embodiment;
FIG. 2 is a perspective cross-sectional view of a bearing assembly according to an embodiment
FIG. 3 is a perspective cross-sectional view of a bearing assembly installed between a stationary component and a rotating component of a turbine engine according to an embodiment;
FIG. 4 is a cross-sectional view of a portion of the turbine engine including the bearing assembly according to an embodiment; and
FIG. 5 is a detailed cross-sectional view of a portion of the bearing assembly according to an embodiment; and
FIG. 6 is a detailed cross-sectional view of a portion of the bearing assembly according to another embodiment.

### DETAILED DESCRIPTION

A detailed description of one or more embodiments of the disclosed apparatus and method are presented herein by way of exemplification and not limitation with reference to the Figures.

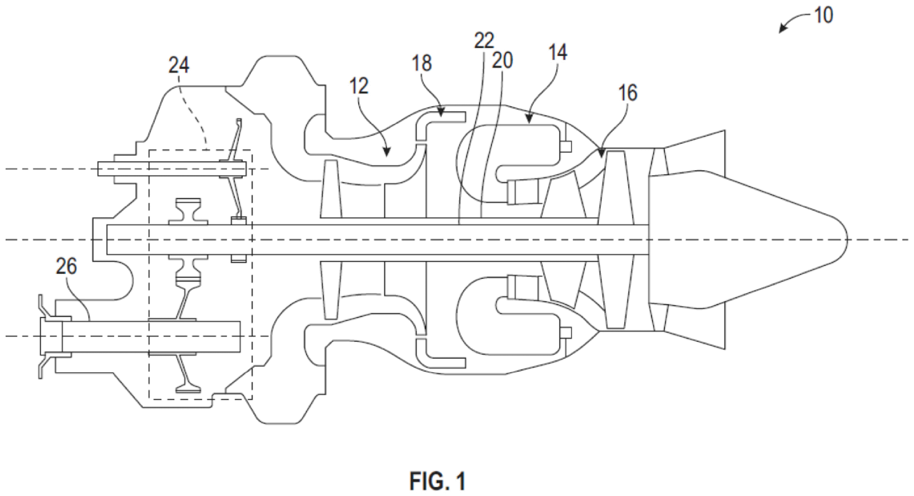

With reference now to the Figure 1, an example of a turbine engine is illustrated. In this example, the turbine engine is a turboshaft engine generally including, in serial flow communication, a multistage compressor 12 for pressurizing a flow of air, a combustor 14 in which the compressed air is mixed with fuel and ignited for generating an annular stream of hot combustion gases, and a turbine section 16 for extracting energy from the combustion gases. The turbine engine terminates in an exhaust section.

The fluid path extending sequentially across the compressor 12, the combustor 14, and the turbine 16 can be referred to as the core gas path 18. In practice, the combustor 14 can include a plurality of identical, circumferentially interspaced, combustor units. In the non-limiting embodiment illustrated in FIG. 1, the turboshaft engine has two compressor and turbine stages, including a high-pressure stage associated with a high-pressure shaft 20 and a low-pressure stage associated with a low-pressure shaft 22. The low-pressure shaft 22 is used as a power source during use, and the low-pressure turbine can thus be referred to as a power turbine.

Turboshaft engines, similar to turboprop engines, typically have some form of gearing by which the power of the low-pressure shaft 22 is transferred to a load. The load can be an external shaft 26 bearing aircraft transmission shaft, blades or propeller, or an electric generator for instance. Some turbofan designs can also have some form of gearing via which power is transferred to a shaft bearing a fan, such as an aft fan arrangement for instance. Gearing, which can be referred to as a gearbox 24 for the sake of simplicity, typically reduces the rotation speed to reach an external rotation speed which is better adapted to a rotation speed of the load.

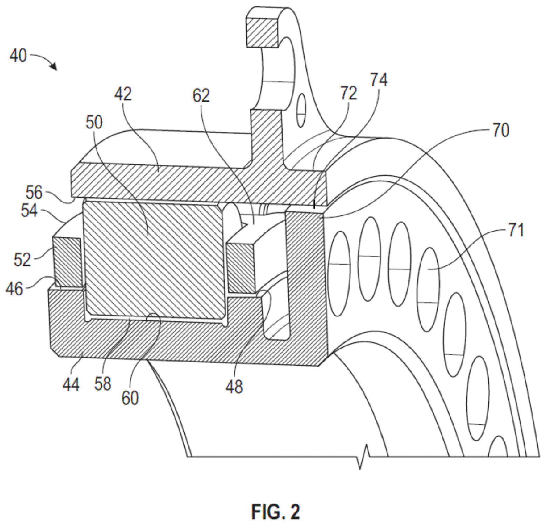

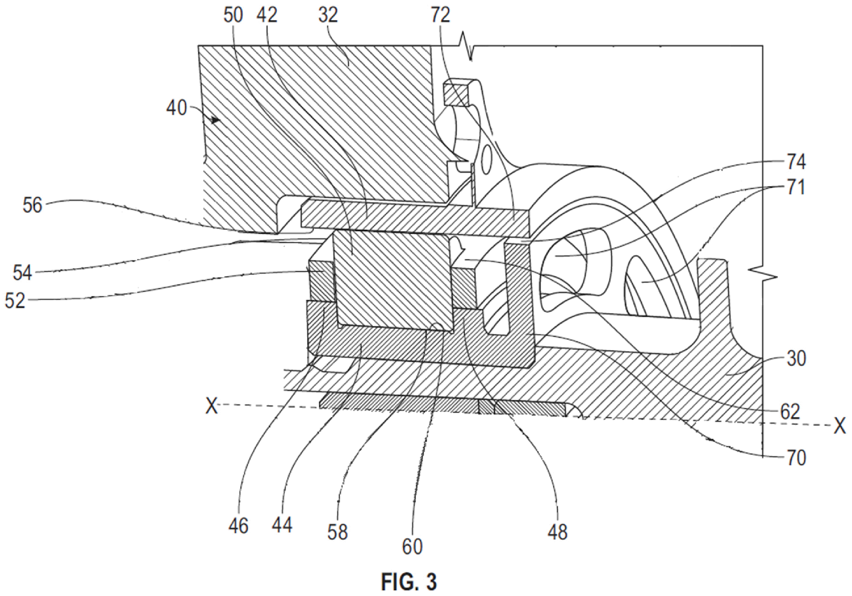

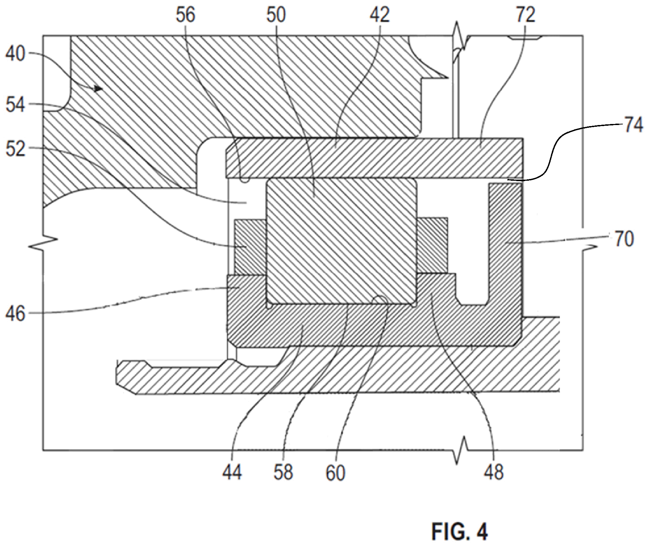

With reference now to FIGS. 2-4, an example of a bearing assembly 40 is shown. The bearing assembly 40 may be integrated into a turboshaft engine, such as turboshaft engine 10 for example or a gearbox. In the illustrated, non-limiting embodiment, the bearing assembly 40 is arranged at an interface between a rotating shaft 30 and a stationary structure 32. The rotating shaft 30 may be a main shaft operable to transmit power from a gearbox, such as gearbox 24 for example, to a rotor of an aircraft.

As shown, the bearing assembly 40 includes a first ring 42, such as an outer ring, and a second ring 44, such as an inner ring. However, embodiments where the first ring 42 is the inner ring and the second ring 44 is the outer ring of the bearing assembly 40 are also contemplated herein. The first ring 42 and the second ring 44 are radially aligned such that a cavity is defined therebetween. In an embodiment, the second ring 44 is mounted to and rotatable with a shaft 30 about an axis X, and the first ring 42 is engaged with stationary component 32, such as a fixed housing for example. However, embodiments where the second ring 44 is coupled to the stationary component 32 and the first ring 42 is coupled to a rotatable component 30, and embodiments where both the second ring 44 and the first ring 42 are affixed to rotatable components are also within the scope of the disclosure. Further, embodiments where the second ring is "floating" or movable in one or more degrees of freedom are also within the scope of the disclosure. In some embodiments, a rotatable shaft, such as shaft 30 for example, may function as the second ring 44. In such embodiments, a separate structure need not be required to form the second ring.

In the illustrated non-limiting embodiment, the second ring 44 includes a first shoulder 46 and a second shoulder 48 extending radially toward the first ring 42. A plurality of rolling elements 50 are positioned between the second ring 44 and the first ring 42. Although the rolling elements 50 illustrated in the FIGS. are cylindrical rolling elements, it should be understood that bearings having rolling elements of another configuration, such as ball bearing elements or tapered rolling elements for example, are also contemplated herein. In an embodiment, the first shoulder 46 and the second shoulder 48 of the second ring 44 are laterally spaced to form a ringway therebetween and within which the plurality of rolling elements are positionable. Although the first shoulder 46 and second shoulder 48 are illustrated at the second ring 44, embodiments where the first shoulder 46 and the second shoulder 48 are alternatively or additionally arranged at the first ring 42 and extend radially toward the second ring 44, and embodiments where one shoulder 46 is arranged at the second ring 44 and another shoulder 48 is arranger at the first ring 42 are also within the scope of the disclosure.

As shown, the bearing assembly 40 may additionally include a roller bearing cage 52. The roller bearing cage 52 may be cylindrical in shape and may define an axis X. The roller bearing cage 52 is positioned radially between the first ring 42 and the second ring 44. For example, the first ring 42 may be located radially outward of the roller bearing cage 52 and the second ring 44 may be located radially inward of the roller bearing cage 52. In an embodiment, the roller bearing cage 52 is centered on the first and second shoulders 46, 48.

In embodiments where the bearing assembly 40 includes a roller bearing cage 52, the plurality of rolling elements 50 are guided within the roller bearing cage 52 about the axis of rotation X. The roller bearing cage 52 may include a plurality of pockets or windows 62 and in an embodiment, each roller bearing element 50 is arranged within a respective pocket 62 of the plurality of pockets. When mounted within a pocket 62, each roller bearing element 50 extends radially outwardly from the roller bearing cage 52 in a first direction into contact with an adjacent surface 56 of the first ring 42 and extends radially outwardly from the roller bearing cage 52 in a second direction, into contact with an adjacent surface 60 of the second ring 44. Accordingly, rotation of at least one of the first ring 42 and the second ring 44 about the axis X causes the rolling elements 50 to rotate about the axis X. Further, a difference in rotational speed between the first ring 42 and the second ring 44 will drive movement of the rolling elements 50 about their respective axes.

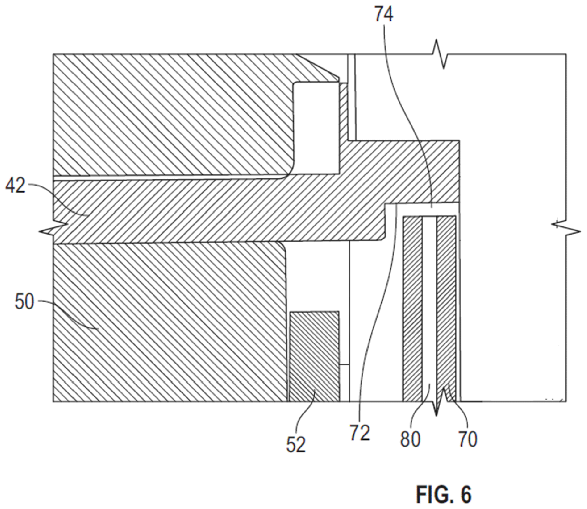

With continued reference to FIGS. 2-4, the bearing assembly 40 may additionally include one or more features 70 for limiting the eccentricity of the bearing assembly 40 in the event of a failure or fracture of the roller bearing cage 52 or other failure modes. In the illustrated, non-limiting embodiment, the feature 70 is a radial member that extends radially from proximate the second ring 44 to proximate the first ring 42. The body of the radial member 70 may be substantially solid. However, in other embodiments, one or more openings or through holes 71 (FIG. 6) may be formed in the radial member 70 to reduce the overall material and weight of the radial member 70 and also ensure proper lubrication and potential debris evacuation. In some embodiments, the radial member 70 may form part of a lubricant drainage path of the bearing assembly 40. For example, roller bearing lubrication may drain through the one or more holes 71 formed in the radial member 70 and thru the gap 74, to be described in more detail below.

The radial member 70 may be rotatably coupled to the rotational shaft proximate the second ring 44. In the illustrated, non-limiting embodiment, the radial member 70 is integrally formed with the second ring 44. However, embodiments where the radial member 70 is formed as a separate component from the second ring 44 are also within the scope of the disclosure. In embodiments where the radial member 70 is separate from the second ring 44, the radial member 70 may be formed from a same material, or alternatively, from a different material than the second ring 44

As shown, the first ring 42 may be axially elongated relative to the second ring 44 such that a portion 72 of the first ring 42 extends axially beyond the second ring 44 in a first direction. This portion 72 of the first ring 42 may also be referred to herein as the "engagement portion" of the first ring 42. The radial member 70 is axially offset from the rolling elements 50 and the roller bearing cage 52 and is instead radially aligned with the engagement portion 72 of the first ring 42. A distal end of the radial member 70 is offset from the adjacent engagement portion 72 of the first ring 42 such that a clearance 74, also referred to herein as an "engagement clearance," is formed between the radial member 70 and the engagement portion 72. It should be appreciated that although the radial member 70 is illustrated as extending from the second ring 44 toward the first ring 42, embodiments where the radial member 70 extends from the first ring 42 toward the second ring 44 are also contemplated herein. In such embodiments, the engagement portion 72 may be arranged at an elongated portion of the second ring 44, and the engagement clearance 74 would be formed between the distal end of the radial member 70 and the engagement portion 72 of the second ring 44.

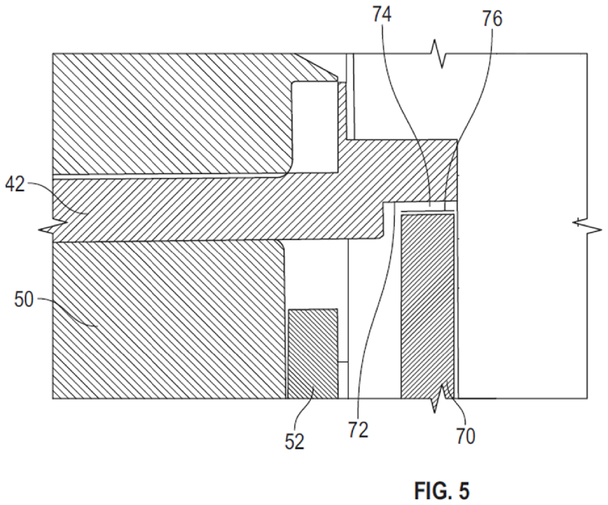

With reference to FIGS. 5 and 6, the engagement clearance 74 between the radial member 70 and the engagement portion 72 of the first ring 42 may be radially offset from an outer surface of the rolling elements 50 located closest to the first ring 42. The engagement clearance 74 is located a first radial distance from the axis of rotation X of the bearing assembly 40. An exterior surface of the rolling elements 50 located proximate the surface 56 of the first ring 42 are located a second radial distance from the axis of rotation X of the bearing assembly 40. In the illustrated, non-limiting embodiment, the first radial distance is greater than the second radial distance. In some embodiments, the first ring 42 has a stepped configuration to achieve this radial offset.

In an embodiment, an anti-friction material or coating 76 (FIG. 5) is arranged at the distal end of the radial member 70. The anti-friction coating 76, may alternatively or additionally be arranged at the surface of the engagement portion 72 facing toward the radial member 70. In some embodiments, the radial member 70 or the engagement portion 72 of the first ring 42 is heat-treated or formed from a heat-treated material to increase the hardness of each of these portions at the engagement clearance 74. Examples of heat-treatments suitable to achieve an increased hardness include but are not limited to induction hardening and carburization and nitriding. In another embodiment, the radial member 70 may be formed from a material configured to deteriorate faster than the second ring 44 or first ring 42. The rapid deterioration of the radial member 70 may function as a detection device or indicator, or alternatively, may be detected or sensed by a separate detection device.

During normal operating conditions, the engagement clearance 74 is present between the radial member 70 and the engagement portion 72 such that the radial member 70 is not in contact with the first ring 42. In the event of a fracture or failure of the roller bearing cage 52, the radial member 70 will eventually engage the adjacent, interior surface 56 of the first ring 42 at the engagement portion 72. This engagement between the radial member 70 and the engagement portion 72 will limit the eccentricities of the bearing assembly 40, and specifically of the rolling elements 50. As a result, the rolling elements 50 are prevented from separating from the first and second rings 42, 44 of the bearing assembly 40. Further, as a result of this engagement between the radial member 70 and the engagement portion 72, the load acting on the rolling elements 50 will also be shared by the radial member 70.

In an embodiment, the radial member 70 forms a journal bearing. With reference to FIG. 6, in such embodiments one or more lubricant or oil channels 80 may extend through a central portion of the radial member 70. Oil or lubricant may be provided to the gap 74 from an external oil jet (not shown), or alternatively or additionally, from another component of the bearing assembly 40 thru the channel 80. In instances where the radial member 70 forms a journal bearing, an inner diameter of the radial member 70 may be the same, or alternatively, may be different than the adjacent bearing ring, such as the second ring 44 for example.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A bearing assembly of a gas turbine engine or gearbox, the bearing assembly comprising:
a first ring;
a second ring, the second ring being radially aligned with the first ring such that a cavity is formed therebetween;
a plurality of rolling elements arranged within the cavity;
a cage operably coupled to the plurality of rolling elements; and
a radial member extending from proximate the second ring toward the first ring, a distal end of the radial member being separated from an interior surface of the first ring by an engagement clearance.

2. The bearing assembly of claim 1, wherein the radial member is integrally formed with the second ring, or
wherein the radial member is separate from the second ring.

3. The bearing assembly of claim 1 or 2, wherein one of the first ring and the second ring is a shaft.

4. The bearing assembly of any preceding claim, wherein the first ring is axially elongated relative to the second ring, the first ring having an engagement portion that extends axially beyond the second ring, the radial member being radially aligned with the engagement portion.

5. The bearing assembly of claim 4, wherein at least one of the radial member and the interior surface of the first ring at the engagement portion includes an anti-friction material.

6. The bearing assembly of claim 4 or 5, wherein at least one of the radial member and the interior surface of the first ring at the engagement portion is formed from a heat-treated material.

7. The bearing assembly of any preceding claim, wherein the radial member forms a part of a lubricant drainage path from the plurality of rolling elements,
wherein, optionally, the radial member includes a plurality of through holes that form the part of the lubricant drainage path.

8. The bearing assembly of any preceding claim, wherein the engagement clearance is radially offset from an exterior surface of the plurality of rolling elements engageable with the second ring and the first ring.

9. The bearing assembly of claim 8, wherein the engagement clearance is located a first radial distance from the axis of rotation of the bearing assembly and the exterior surface of the plurality of rolling elements engageable with the first ring is located a second radial distance from the axis of rotation of the bearing assembly, the first radial distance being greater than the second radial distance.

10. The bearing assembly of claim 8 or 9, wherein the first ring has a stepped configuration.

11. The bearing assembly of any preceding claim, wherein the radial member is a journal bearing, and/or
wherein an oil channel extends through a portion of the radial member.

12. A gas turbine engine or aeronautical gearbox comprising:
a shaft rotatable about an axis;
a bearing assembly associated with the shaft, the bearing assembly including:
a first ring, a second ring, and a cavity formed between the first ring and the second ring;
a plurality of rolling elements coupled to a roller bearing cage, the plurality of rolling elements being arranged within the cavity; and
a radial member extending toward the first ring, a distal end of the radial member being separated from an interior surface of the first ring by an engagement clearance.

13. The gas turbine engine of claim 12, wherein the first ring is associated with a stationary component, or
wherein the first ring is associated with a rotatable component.

14. The gas turbine engine of claim 12 or 13, wherein the radial member is axially offset from the roller bearing cage, and/or
wherein the first ring is an outer ring and the second ring is an inner ring.

15. A method of operating a gas turbine engine, the method comprising:
providing a bearing assembly including a first ring rotatably fixed to a shaft, a second ring, a plurality of rolling elements arranged within a cavity formed between the first ring and the second ring, and a radial member extending from the first ring toward the second ring, the radial member being offset from the second ring by an engagement clearance;
rotating the shaft about an axis of rotation; and
in response to a failing of an element of the bearing assembly, engaging the second ring with the radial member to restrict separation of the plurality of rolling elements from the cavity.
